(19) Europäisches Patentamt
European Patent Office
Office européen des brevets

(11) **EP 4 095 757 A1**

(12) **EUROPEAN PATENT APPLICATION**

(43) Date of publication:
**30.11.2022 Bulletin 2022/48**

(21) Application number: **22173425.4**

(22) Date of filing: **16.05.2022**

(51) International Patent Classification (IPC):
**G06N 3/04** *(2006.01)*     **G06N 7/00** *(2006.01)*
**G06N 3/08** *(2006.01)*

(52) Cooperative Patent Classification (CPC):
**G06N 3/0454; G06N 3/0472; G06N 3/084;
G06N 3/088; G06N 7/005**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.06.2021 US 202117343477**

(71) Applicant: **Baidu USA LLC
Sunnyvale, California 94089 (US)**

(72) Inventors:
• **Xie, Jianwen**
 **Sunnyvale, 94089 (US)**
• **An, Dongsheng**
 **Sunnyvale, 94089 (US)**
• **Li, Ping**
 **Sunnyvale, 94089 (US)**

(74) Representative: **Maiwald GmbH
Elisenhof
Elisenstraße 3
80335 München (DE)**

(54) **LEARNING DEEP LATENT VARIABLE MODELS BY SHORT-RUN MCMC INFERENCE WITH OPTIMAL TRANSPORT CORRECTION**

(57) Learning latent variable models with deep top-down architectures typically requires inferring latent variables for each training example based on posterior distribution of these latent variables. The inference step relies on either time-consuming long-run Markov chain Monte Carlo (MCMC) sampling or a separate inference model for variational learning. Embodiments of a short-run MCMC, such as a short-run Langevin dynamics, are used herein as an approximate flow-based inference engine. Bias existing in the output distribution of non-convergent short-run Langevin dynamics may be corrected by optimal transport (OT), which aims at transforming the biased distribution produced by finite-step MCMC to the prior distribution with a minimum transport cost. Experiment results verify the effectiveness of the OT correction for the short-run MCMC, and demonstrate that latent variable models trained by the disclosed strategy performed better than the variational auto-encoder in terms of image reconstruction, generation and anomaly detection.

FIG. 3

**Description**

**TECHNICAL FIELD**

The present disclosure relates generally to systems and methods for computer learning that can provide improved computer performance, features, and uses. More particularly, the present disclosure relates to systems and methods to learn deep latent variable models for improved performance.

**BACKGROUND**

Deep generative models have achieved great successes in many domains, such as image generation, image recovery, image representation, image disentanglement, anomaly detection, etc. Such models typically include simple and expressive generator networks, which are latent variable models assuming that each observed example is generated by a low-dimensional vector of latent variables, and the latent vector follows a non-informative prior distribution, such as Gaussian distribution. Since high dimensional visual data (e.g., images) usually lie on low-dimensional manifolds embedded in the high-dimensional space, learning latent variable models of visual data is of fundamental importance in the field of computer vision for the sake of unsupervised representation learning. The challenge mainly comes from the inference of the latent variables for each observation, which typically relies on Markov chain Monte Carlo (MCMC) methods to draw fair samples from the analytically intractable posterior distribution (i.e., the conditional distribution of the latent variables given the observed example). Since the posterior distribution of the latent variables is parameterized by a highly non-linear deep neural network, the MCMC-based inference may suffer from non-convergence and inefficiency problems, thus affecting the accuracy of the model parameter estimation.

Accordingly, what is needed are systems and methods to learn deep latent variable models with improved efficiency.

**SUMMARY**

In a first aspect, a method for training a latent variable model is provided. The method includes: inferring, by a short-run Markov chain Monte Carlo (MCMC), a latent vector for each of a plurality of observed examples that are generated from the latent variable model to obtain a population of inferred latent vectors; moving, through optimal transport (OT) correction, the population of inferred latent vectors to a prior distribution; and updating model parameters of the latent variable model by gradient descent based on the corrected latent vectors and corresponding observed examples.

In a second aspect, a system for training a latent variable model is provided. The system includes: one or more processors; and a non-transitory computer-readable medium or media comprising one or more sets of instructions which, when executed by at least one of the one or more processors, causes steps of the method in the first aspect to be performed.

In a third aspect, a non-transitory computer-readable medium or media comprising one or more sequences of instructions which, when executed by at least one processor, causes steps of the method in the first aspect to be performed is provided.

Embodiments of a short-run MCMC, such as a short-run Langevin dynamics, are used herein as an approximate flow-based inference engine. Bias existing in the output distribution of non-convergent short-run Langevin dynamics may be corrected by optimal transport (OT), which aims at transforming the biased distribution produced by finite-step MCMC to the prior distribution with a minimum transport cost. Experiment results verify the effectiveness of the OT correction for the short-run MCMC, and demonstrate that latent variable models trained by the disclosed strategy performed better than the variational auto-encoder in terms of image reconstruction, generation and anomaly detection.

**BRIEF DESCRIPTION OF THE DRAWINGS**

References will be made to embodiments of the disclosure, examples of which may be illustrated in the accompanying figures. These figures are intended to be illustrative, not limiting. Although the disclosure is generally described in the context of these embodiments, it should be understood that it is not intended to limit the scope of the disclosure to these particular embodiments. Items in the figures may not be to scale.

Figure ("FIG.") 1 depicts a block diagram of a deep latent variable model, according to embodiments of the present disclosure.
FIG. 2 depicts different ways of training a deep latent variable model.
FIG. 3 depicts long-run and short-run MCMC inference frameworks, according to embodiments of the present disclosure.

FIG. 4 depicts a process to learn a deep latent variable model using short-run MCMC inference and optimal transport correction, according to embodiments of the present disclosure.

FIG. 5 depicts a change of output distribution by optimal transport correction, according to embodiments of the present disclosure.

FIG. 6 depicts a process for short-run MCMC inference, according to embodiments of the present disclosure.

FIG. 7 depicts a process for optimal transport correction, according to embodiments of the present disclosure.

FIG. 8 depicts visualization of the latent codes sampled from the marginal distribution $q_\phi(z^K)$ at different iterations and the prior distribution, according to embodiments of the present disclosure.

FIG. 9 depicts output marginal distributions of z by different models trained on images from class "0" and class "1" of Dataset A, according to embodiments of the present disclosure.

FIG. 10A depicts influence of hyperparameter $\alpha$ controlling percentage of the optimal transport on optimal transport cost over different iterations, according to embodiments of the present disclosure.

FIG. 10B depicts influence of hyperparameter $\alpha$ controlling percentage of the optimal transport on mean squared error (MSE) loss over different iterations, according to embodiments of the present disclosure.

FIG. 10C depicts influence of hyperparameter $\alpha$ controlling percentage of the optimal transport on Frechet Inception Distance (FID) over different iterations, according to embodiments of the present disclosure.

FIG. 11 depicts a simplified block diagram of a computing device/information handling system, according to embodiments of the present disclosure.

## DETAILED DESCRIPTION OF EMBODIMENTS

In the following description, for purposes of explanation, specific details are set forth in order to provide an understanding of the disclosure. It will be apparent, however, to one skilled in the art that the disclosure can be practiced without these details. Furthermore, one skilled in the art will recognize that embodiments of the present disclosure, described below, may be implemented in a variety of ways, such as a process, an apparatus, a system, a device, or a method on a tangible computer-readable medium.

Components, or modules, shown in diagrams are illustrative of exemplary embodiments of the disclosure and are meant to avoid obscuring the disclosure. It shall be understood that throughout this discussion that components may be described as separate functional units, which may comprise sub-units, but those skilled in the art will recognize that various components, or portions thereof, may be divided into separate components or may be integrated together, including, for example, being in a single system or component. It should be noted that functions or operations discussed herein may be implemented as components. Components may be implemented in software, hardware, or a combination thereof.

Furthermore, connections between components or systems within the figures are not intended to be limited to direct connections. Rather, data between these components may be modified, re-formatted, or otherwise changed by intermediary components. Also, additional or fewer connections may be used. It shall also be noted that the terms "coupled," "connected," "communicatively coupled," "interfacing," "interface," or any of their derivatives shall be understood to include direct connections, indirect connections through one or more intermediary devices, and wireless connections. It shall also be noted that any communication, such as a signal, response, reply, acknowledgement, message, query, etc., may comprise one or more exchanges of information.

Reference in the specification to "one or more embodiments," "preferred embodiment," "an embodiment," "embodiments," or the like means that a particular feature, structure, characteristic, or function described in connection with the embodiment is included in at least one embodiment of the disclosure and may be in more than one embodiment. Also, the appearances of the above-noted phrases in various places in the specification are not necessarily all referring to the same embodiment or embodiments.

The use of certain terms in various places in the specification is for illustration and should not be construed as limiting. A service, function, or resource is not limited to a single service, function, or resource; usage of these terms may refer to a grouping of related services, functions, or resources, which may be distributed or aggregated. The terms "include," "including," "comprise," "comprising," or any of their variants shall be understood to be open terms and any lists the follow are examples and not meant to be limited to the listed items. A "layer" may comprise one or more operations. The words "optimal," "optimize," "optimization," and the like refer to an improvement of an outcome or a process and do not require that the specified outcome or process has achieved an "optimal" or peak state. The use of memory, database, information base, data store, tables, hardware, cache, and the like may be used herein to refer to system component or components into which information may be entered or otherwise recorded.

In one or more embodiments, a stop condition may include: (1) a set number of iterations have been performed; (2) an amount of processing time has been reached; (3) convergence (e.g., the difference between consecutive iterations is less than a first threshold value); (4) divergence (e.g., the performance deteriorates); (5) an acceptable outcome has been reached; and (6) all of the data has been processed.

One skilled in the art shall recognize that: (1) certain steps may optionally be performed; (2) steps may not be limited to the specific order set forth herein; (3) certain steps may be performed in different orders; and (4) certain steps may be done concurrently.

Any headings used herein are for organizational purposes only and shall not be used to limit the scope of the description or the claims. Each reference/document mentioned in this patent document is incorporated by reference herein in its entirety.

It shall be noted that any experiments and results provided herein are provided by way of illustration and were performed under specific conditions using a specific embodiment or embodiments; accordingly, neither these experiments nor their results shall be used to limit the scope of the disclosure of the current patent document.

## A. General Introduction

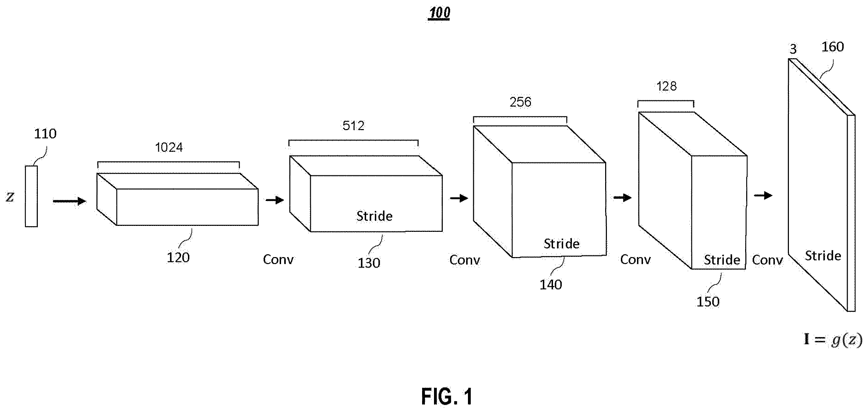

Deep generative models have achieved great successes in many domains, such as image generation, image recovery, image representation, image disentanglement, anomaly detection, etc. Such models typically include simple and expressive generator networks, which are latent variable models assuming that each observed example is generated by a low-dimensional vector of latent variables, and the latent vector follows a non-informative prior distribution, such as Gaussian distribution. FIG. 1 depicts a block diagram of a deep latent variable model 100, according to embodiments of the present disclosure. The model comprises a plurality of convolutional layers, e.g., a first layer 120, a second layer 130, a third layer 140, and a fourth layer 150, to project and reshape a latent vector $z$ 110 by a non-linear transformation $g(z)$ into an observed sample $I$ 160, e.g., an image. One or more layers in the model may implement a convolution with a stride for desired operation.

Since high dimensional visual data (e.g., images) usually lie on low-dimensional manifolds embedded in the high-dimensional space, learning latent variable models of visual data is of fundamental importance in the field of computer vision for the sake of unsupervised representation learning. However, learning such a model is challenging due to non-linear parameterization of $g$.

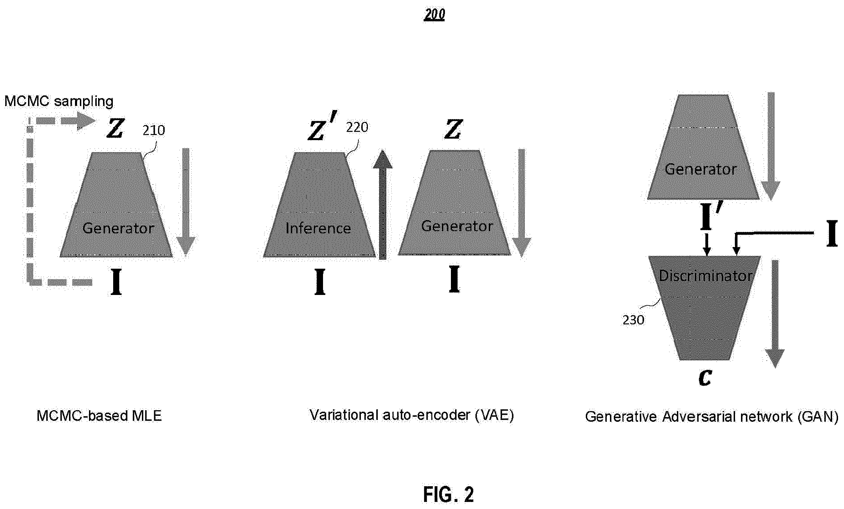

FIG. 2 depicts different ways of training a deep latent variable model 210. The challenge for Markov chain Monte Carlo (MCMC) based maximum likelihood estimate (MLE) 210 mainly comes from the inference of the latent variables for each observation, which typically relies on MCMC methods to draw fair samples from the analytically intractable posterior distribution (i.e., the conditional distribution of the latent variables given the observed example). Since the posterior distribution of the latent variables is parameterized by a highly non-linear deep neural network, the MCMC-based inference may suffer from non-convergence and inefficiency problems, thus affecting the accuracy of the model parameter estimation.

Variational auto-encoder (VAE) and generative adversarial network (GAN) are currently popular way to train a deep latent variable model. These two models train the generator by recruiting an extra model for assisting in the training, and will disregard it in testing. To avoid inefficient MCMC sampling from the posterior, variational inference becomes an attractive alternative by approximating the intractable posterior via a tractable network. Despite the growing prevalence and popularity of the VAE, its drawbacks are increasingly obvious. First, it parameterizes the intrinsic iterative inference process by an extrinsic feedforward inference model 220. These extra parameters due to the reparameterization have to be estimated together with those of the generator network. Second, such a joint training is to be accomplished by maximizing the variational lower bound. Thus, the accuracy of VAE heavily depends on the accuracy of the inference model as an approximation of the true posterior distribution. Only when the Kullback-Leibler (KL) divergence between the inference and the posterior distribution is equal to zero, the variational inference is equivalent to the desired maximum likelihood estimation. This goal is usually infeasible in practice. Third, an extra effort is required to made in designing the inference model of VAE, especially for the generators that have complicated dependency structures with the latent variables, e.g., some proposed a top-down generator with multiple layers of latent variables, some proposed dynamic generators with time sequences of latent variables. It is not a simple task to design inference models that infer latent variables for models mentioned above. An arbitrary design of the inference model cannot guarantee the performance. The GAN approach of training involves a discriminator 230 besides the generator, thus has two sets of parameters during training. Model collapse may happen during the training process. Furthermore, an effective inference model is hard to design for the GAN approach.

In the present disclosure, the idea of reparameterizing the inference process is totally abandoned. Instead, embodiments of an MCMC-based inference for training deep latent variable models are disclosed. Specifically, embodiments of a short-run MCMC, such as a short-run Langevin dynamics, are used to perform the inference of the latent vectors during training. However, considering that the convergence of finite-step Langevin dynamics in each iteration might be a concern, embodiments of optimal transport (OT) are used to correct bias that may exist in such a short-run MCMC. The OT may be adopted to transform an arbitrary probability distribution to a desired distribution with a minimum transport cost. Thus, the OT cost may be used to measure the difference between two probability distributions. In one or more embodiments of the present disclosure, the short-run MCMC is treated as a learned flow model whose parameters are from the latent variable model. Bias of the short-run MCMC may be corrected by performing an optimal transport from the result distribution produced by the short-run MCMC to the prior distribution. Such an operation is to minimize the OT cost between the inference distribution and the prior distribution, in which parameters in the flow model are updated instead of optimized. With the corrected inference output, the parameters of the latent variable model may be updated more accurately.

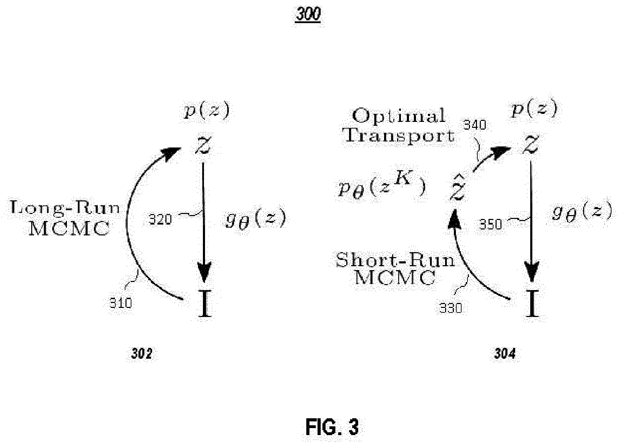

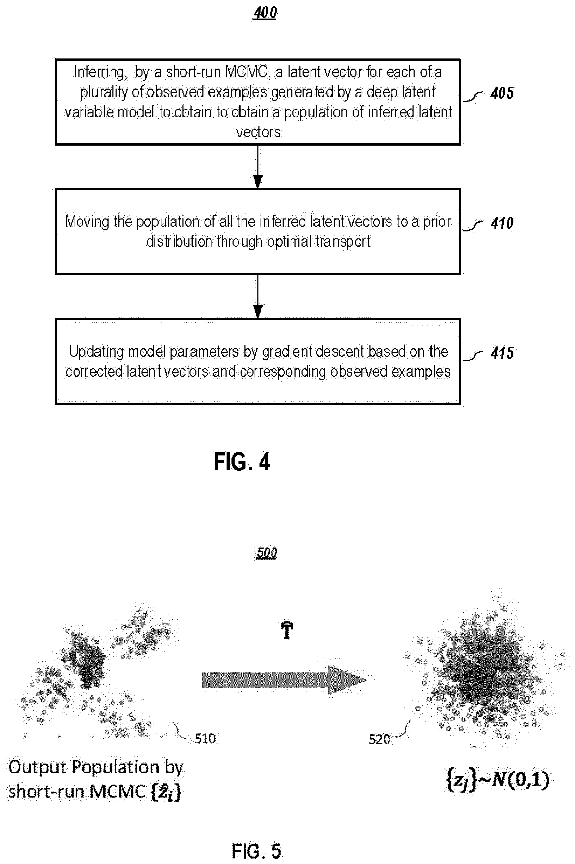

FIG. 3 depicts long-run and short-run MCMC inference frameworks, according to embodiments of the present disclosure. Traditional long-run MCMC inference framework involves only an inference step 310 and a learning step 320. As described earlier, such a long-run MCMC-based inference may suffer from non-convergence and inefficiency problems, thus affecting the accuracy of the model parameter estimation. While on the other hand, the present document discloses embodiments of a short-run MCMC inference framework comprising an inference step 330, a correction step 340, and a learning step 350, with details of each step shown in FIG. 4.

FIG. 4 depicts a process to learn a deep latent variable model using short-run MCMC inference and optimal transport correction, according to embodiments of the present disclosure. The process iterates one or more rounds of the following three steps: (1) in inference step 405: inferring, by a short-run MCMC using Langevin dynamics, a latent vector for each of a plurality of observed examples that are generated from the latent variable model to obtain a population of inferred latent vectors. The Langevin dynamics samples from a posterior distribution. (2) in correction step 410: moving the population of all the inferred latent vectors to a prior distribution through optimal transport correction. (3) in learning step 415: update the model parameters by gradient descent based on the corrected latent vectors and corresponding observed examples.

There are several advantages using the disclosed short-run MCMC inference with OT correction: (1) efficiency: The learning and inference of the model are efficient with a short-run MCMC; (2) convenience: The approximate inference model represented by the short-run MCMC is automatic in the sense that there is nothing to worry about the design and training of a separate inference model. Both bottom-up inference and top-down generation are governed by the same set of parameters; and (3) accuracy: the optimal transport corrects the errors of the non-convergent short-run MCMC inference, thus improves the accuracy of the model parameter estimation.

Contributions of the present patent disclosure include at least the following: (1) Embodiments are disclosed to train a deep latent variable model by a non-convergent short-run MCMC inference with OT correction; (2) Embodiment of a semi-discrete OT methodology are extended to approximate the one-to-one map between the inferred latent vectors and the samples drawn from the prior distribution; and (3) Strong empirical results are provided in various experiments to verify the effectiveness of the disclosed strategy to train deep latent variable models.

## B. Some Related Work

### 1. Variational inference

VAE is a popular method to learn generator network by simultaneously training a tractable inference network to approximate the intractable posterior distribution of the latent variables. In VAE, one needs to design an inference model for the latent variables, which is a non-trivial task in a generator network with complex architecture. While in the present patent document, the disclosed method does not rely on an extra inference model to assist the training. It performs inference by Langevin sampling from the posterior distribution, followed by an optimal transport correction.

Alternating back-propagation algorithm. The maximum likelihood learning of the generator network, including its dynamic version, may be achieved by the alternating backpropagation (ABP) algorithm without resorting to an inference model. The ABP algorithm trains the generator model by alternating the following two steps: (1) inference step: inferring the latent variables by Langevin sampling from the posterior distribution, and (2) learning step: updating the model parameters based on the training data and the inferred latent variables by gradient descent. Both steps compute the gradients with the help of back-propagation. The ABP algorithm has been successfully applied to saliency detection, zero-shot learning, and disentangled representation learning, etc.

### 2. Optimal Transport

Optimal transport (OT) is used to compute the distance between two measures and is able to push forward the source distribution to the target distribution. Recently, OT has been widely used in the generative models to help generate high quality samples. For example, by replacing the original KL-divergence in the GAN models with the $W_1$ distance, some proposed the Wasserstein GAN (WGAN) model to achieve better convergence and generate higher quality samples. Some proposed the Wasserstein VAE that minimizes the Wasserstein distance between the inference model and the posterior distribution. Besides the Wasserstein distance, the optimal transport is also used to transport a simple uniform distribution to the complex latent feature distribution extracted by the auto-encoder for image generation.

**C. Embodiments of Maximum Likelihood Learning of Deep Latent Variable Model**

Let $\mathbf{I}$ be a $D$-dimensional observed data example, such as an image. Let $z$ be the $d$-dimensional vector of continuous latent variables. Generalizing from traditional factor analysis model, the generator network assumes the observed example $\mathbf{I}$ is generated from a latent vector $z$ by a non-linear transformation $\mathbf{I} = g_\theta(z) + \varepsilon$, where $g_\theta$ is a top-down convolutional neural network (sometime called deconvolutional neural network) with parameters $\theta$ that comprises all trainable weights and bias terms in the network, $\varepsilon \sim \mathcal{N}(0, \sigma^2 I_D)$ is the observation error, and $z \sim \mathcal{N}(0, I_d)$. $I_d$ and $I_D$ are d-dimensional and $D$-dimensional identity matrices, respectively, and it is assumed that $d << D$. The generator network may essentially be a non-linear latent variable model that defines the joint distribution of $(\mathbf{I}, z)$,

$$p_\theta(\mathbf{I}, z) = p_\theta(\mathbf{I}|z)p(z) \qquad (1)$$

where it is assumed that the prior distribution $p(z) = \mathcal{N}(0, I_d)$ and $p(\mathbf{I}|z) = \mathcal{N}(g_\theta(z), \sigma^2 I_D)$. The standard deviation $\sigma$ takes an assumed value. Following the Bayes rule, the marginal distribution $p_\theta(\mathbf{I}) = \int p_\theta(\mathbf{I}, z)dz$ and the posterior distribution $p_\theta(z|\mathbf{I}) = p_\theta(\mathbf{I},z)/p_\theta(\mathbf{I})$ may be obtained.

Given a set of training examples $\{\mathbf{I}_i, i = 1, \ldots, n\} \sim p_{data}(\mathbf{I})$. where $p_{data}(\mathbf{I})$ is the unknown data distribution. $p_\theta$ may be trained by maximizing the log-likelihood of the training samples:

$$\mathcal{L}(\theta) = \frac{1}{n}\sum_{i=1}^{n} \log p_\theta(\mathbf{I}_i) \qquad (2)$$

which is equivalent to the minimization of $KL(p_{data}\|p_\theta)$ when the number of training examples n is large enough.

In one or more embodiments, the maximization of the log-likelihood function presented in Equation (2) may be accomplished by gradient ascent algorithm that iterates

$$\theta_{t+1} = \theta_t + \gamma_t \frac{1}{n}\sum_{i=1}^{n} \nabla_\theta \log p_\theta(\mathbf{I}_i) \qquad (3)$$

where $\gamma_t$ is the learning rate depending on time $t$ and the gradient of the log probability is given by:

$$\nabla_\theta \log p_\theta(\mathbf{I}) = \frac{1}{p_\theta(\mathbf{I})} \nabla_\theta p_\theta(\mathbf{I}) \qquad (4)$$

$$= \int [\nabla_\theta \log p_\theta(\mathbf{I}, z)] \frac{p_\theta(\mathbf{I}, z)}{p_\theta(\mathbf{I})} dz$$

$$= E_{p_\theta(z|\mathbf{I})}[\nabla_\theta \log p_\theta(\mathbf{I}, z)]$$

To compute $\nabla_\theta \log p_\theta(\mathbf{I})$ in Equation (4), it is necessary to estimate $\nabla_\theta \log p_\theta(\mathbf{I},z)$. According to Equation (1), the logarithm of the join distribution is given by:

$$\log p_\theta(\mathbf{I}, z) = -\frac{1}{2\sigma^2} \| \mathbf{I} - g_\theta(z) \|^2 - \frac{1}{2} \| z \|^2 + \text{const}, \qquad (5)$$

where the constant term is independent of $z$ or $\theta$, thus $\nabla_\theta \log p_\theta(\mathbf{I}, z) = \frac{1}{\sigma^2}(\mathbf{I} - g_\theta(z))\nabla_\theta g_\theta(z)$, where $\nabla_\theta g_\theta(z)$

can be efficiently computed by back-propagation.

## D. Embodiments of Short-run MCMC inference

### 1. Long-run Langevin Dynamics Embodiments

To learn the model parameter $\theta$ by using Equation (3), the key is to compute the intractable expectation term in Equation (4), which can be achieved by first drawing samples from $p_\theta(\mathbf{I},z)$ and then using the Monte Carlo sample average to approximate it. Given a step size $s > 0$, and an initial value $z^0$, Langevin dynamics, a gradient-based MCMC method, may produce samples from the posterior density $p_\theta(z|\mathbf{I})$ by recursively computing

$$z^{k+1} = z^k + \frac{s^2}{2} \nabla_z \log p_\theta(z|\mathbf{I}) + s\xi_k, \tag{6}$$

In Equation (6), k indexes the time step of Langevin dynamics, $\xi_k \sim \mathcal{N}(0,I_d)$ is a random noise diffusion. Also,

$$\nabla_z \log p_\theta(z|\mathbf{I}) = \frac{1}{\sigma^2}\big(\mathbf{I} - g_\theta(z)\big)\nabla_z g_\theta(z) - z$$, where $\nabla_z g_\theta(z)$ may be efficiently computed by back-propagation.

In one or more embodiments, $K$ is used to denote the number of Langevin steps. When $s \to 0$ and $K \to \infty$, no matter what an initial distribution of $z^0$ is, $z^K$ will converge to the posterior distribution $p_\theta(z|\mathbf{I})$ and become a fair sample from $p_\theta(z|\mathbf{I})$.

### 2. Short-run Langevin Dynamics Embodiments

It may not be sensible or realistic to use a long-run MCMC to train a deep latent variable model. Within each iteration, running a finite number of Langevin dynamics steps for inference toward $p_\theta(z|\mathbf{I})$ appears to be practical. Thus, a short-run K-step Langevin dynamics is given by:

$$z^0 \sim p_0(z)$$

$$z^{k+1} = z^k + \frac{s^2}{2}\nabla_z \log p_\theta(z|\mathbf{I}) + s\xi_k, \qquad k = 1, \dots, K \tag{7}$$

In one or more embodiments, an initial distribution $p_0$ is assumed to be the Gaussian distribution. Such dynamics may be treated as a conditional generator that transforms a random noise $z^0$ to the target distribution under the condition $\mathbf{I}$. The transformation itself may also be treated as a $K$-layer residual network, where each layer shares the same parameters $\theta$ and has a noise injection. $\kappa_\theta$ is used to denote the $K$-step MCMC transition kernel. The conditional distribution of $z^k$ given $\mathbf{I}$ is:

$$q_\theta(z^K|\mathbf{I}) = \int p_0(z^0)\kappa_\theta(z^K|z^0,\mathbf{I})dz^0 \tag{8}$$

The corresponding marginal distribution of $z^K$ is

$$q_\theta(z^K) = \int q_\theta(z^K|\mathbf{I})p_{data}(\mathbf{I})d\mathbf{I} \tag{9}$$

If the MCMC converges, $q_\theta(z^K)$ should be close to the prior distribution $p(z)$, otherwise, there is a gap between them.

Equation (7) is also called the noise-initialized short-run MCMC, where for each step of parameter update, the short-run MCMC starts from the noise distribution $z^0 \sim p_0(z)$. If the short-run MCMC is initialized by the inferred results obtained in previous iteration, it is called the persistent short-run MCMC.

Despite the efficiency of the short-run MCMC inference in Equation (8), it might not converge to the true posterior distribution $p_\theta(z|\mathbf{I})$. Some treat the short-run MCMC as an approximate inference model and optimizes the step size $s$ by variational inference, in which the step size $s$ is optimized via either a grid search or gradient descent, such that the short-run MCMC $q_s(z|\mathbf{I})$ (here $s$ is the learning parameter) may best approximate the posterior distribution $p_\theta(z|\mathbf{I})$.

### E. Embodiments of MCMC inference with OT correction

In one or more embodiments, optimal transport is used to correct the bias of the short-run inference results. In one or more embodiments, instead of minimizing the difference between the short-run inference model and the true posterior, i.e., $\text{KL}(q_\theta(z^K|\mathbf{I})|p_\theta(z|\mathbf{I}))$, OT is used to minimize the transport cost between the marginal distribution $q_\theta(z^K)$ of the latent variables inferred by the short-run Langevin dynamics and the prior distribution $p_0(z)$.

### 1. OT correction for biased short-run MCMC Embodiments

In one or more embodiments, for learning a top-down latent variable model $\mathbf{I} = g_\theta(z)$ that generates an observed image $\mathbf{I}$ from a latent vector $z$, the following three steps are iterated.

(1) Inference step: the latent vector is first inferred for each observed image $\mathbf{I}_i$ by a $K$-step short-run MCMC, i.e., $\hat{z} \sim p_\theta(z^K|\mathbf{I}_i)$, and then a population $\{\hat{z}_i\}$ of the inferred latent vectors is obtained for all observed data $\{\mathbf{I}_i\}$, where $\{\hat{z}_i\} \sim q_\theta(z^K)$.

(2) Correction step: OT is used to move $\{\hat{z}_i\}$ to the desired prior distribution for closing the gap between them due to non-convergent inference. FIG. 5 depicts a change of output distribution by optimal transport correction, according to embodiments of the present disclosure. As shown in FIG. 5, the OT reshapes the biased population 510 to the prior distribution 520 with a minimum moving cost. With more correct inferred latent vectors, the subsequent parameter update can be more accurate.

(3) Learning step: Given the observed images and their corresponding inferred latent vectors, $\theta$ is updated by Equation (3) and Equation (4). As the $\theta$ becomes increasingly well-trained, the inference engine $q_\theta(z^K)$ becomes more accurate and the correction made by OT also becomes smaller. An illustration of the disclosed strategy using OT correction is presented in the aforementioned FIG. 3. As shown in FIG. 3, the disclosed framework using a short-run MCMC with OT correction 304 is compared with the framework using a traditional long-run MCMC inference 302.

In practice, either the noise-initialized short-run MCMC or the persistent short-run MCMC may be used in the inference step. In one or more experiments, the latter one is chosen for the purpose of quick convergence. As to the correction stage, the one-to-one OT map is learned from $\{\hat{z}_i\}$ to $\{\hat{z}_i\}$, which is a population sampled from the prior Gaussian distribution and of the same size as $\{\hat{z}_i\}$. Computing the optimal transport at each iteration is time-consuming and unnecessary in practice. In one or more embodiments, to make the whole pipeline more efficient, the correction step may be performed after every $L$ iterations. After the bijective OT map $T\{\hat{z}_i\} = z_j$ is obtained, instead of directly updating the model through the paired data $\{(T(\{\hat{z}_i\}), \mathbf{I}_i)\}$, $\hat{z}_i$ may be correct by using a mixture of the OT result and the old one to avoid unstable learning due to a sudden change of $\hat{z}_i$, i.e.,

$$\hat{z}_i \leftarrow \alpha T(\hat{z}_i) + (1 - \alpha)\hat{z}_i \qquad (10)$$

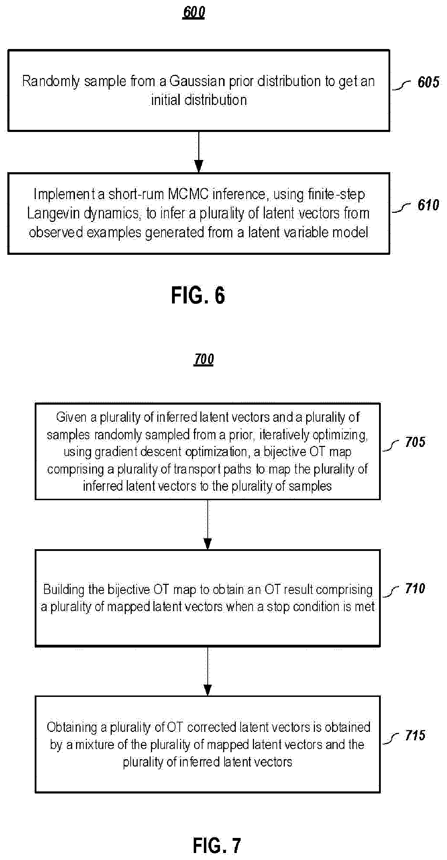

In Equation (10), $\alpha \in [0,1]$ is a hyperparameter that controls the percentage of the OT result used for correction. Accordingly, the corrected paired data $\{(\hat{z}_i, \mathbf{I}_i)\}$ may be obtained to update the model parameter $\theta$. It shall be noted that when $\alpha = 0$, the disclosed model embodiment may be considered to degenerate to the traditional ABP model. If $\alpha$ is set to be 1, the short-run outputs are corrected totally with the OT results. A moderate $0 < \alpha < 1$ is typically helpful to gradually pull the marginal distribution $q_\theta(z^K)$ to the prior distribution $p(z)$ for ensuring a smooth correction. Methodology 1 summarizes the whole pipeline of a learning strategy embodiment with the detailed process for short-run MCMC inference and OT correction shown in FIG. 6 and FIG. 7, respectively.

**Methodology 1:** Short-run MCMC inference with OT correction embodiment

1.    **Input:** observed examples $\{\mathbf{I}_i\}$, (2) number of skip steps $L$, (3) number of Langevin steps $K$, (4) Langevin step size $s$, (5) random samples $\{z_j\}$ from the prior distribution $\mathcal{N}(0, I_d)$, and (6) hyperparameter $\alpha$.

2.    **Output:** Model parameters $\theta$.

3.    $k \leftarrow 1$

4.    **repeat**

5.          #Inference

6.          Infer the latent vectors $\{\hat{z}_i\}$ from $\{\mathbf{I}_i\}$ by a $K$-step short-run Langevin dynamics in Equation (7). The short-run MCMC may be initialized by random noise or the previous result.

7.          # Correction

8.          **if** $k\%L == 0$ **then**

9.                Compute the approximate OT map $\hat{T}$ from $\{\hat{z}_i\}$ to $\{z_j\}$ according to Methodology 2.

10.                $\hat{z}_i \leftarrow \alpha T(\hat{z}_i) + (1-\alpha)\hat{z}_i$

11.          **end if**

12.          # Learning

13.          Update the model parameter $\theta$ by following Equation (3) and Equation (4) with the paired data $\{(\hat{z}_i, \mathbf{I}_i)\}$.

14.          $k \leftarrow k + 1$

15.    **until** Converge

Methodology 2: Short-run MCMC inference with OT correction embodiment

1.  **Input:** source samples $\{\hat{z}_i\}_{i=1}^n$, target samples $\{z_j\}_{j=1}^n$, and a threshold $\varepsilon$.

2.  **Output:** $\hat{T}$

3.  Initialize $h = (0,0,\ldots,0)$.

4.  **repeat**

5.  Compute transport path $J_j$ for $j = 1, 2, \ldots, n$

6.  Compute $\frac{\partial E}{\partial h_j} = \frac{\#J_j}{n} - \frac{1}{n}$

7.  Update $h$ according to the Adam Algorithm with $\beta_1 = 0.9$ and $\beta_2 = 0.5$.

8.  **until** $\|\nabla E\| \leq \varepsilon$

9.  Build the approximate OT map $\hat{T}$ through $J_j$, $j = 1, 2, \ldots, n$.

FIG. 6 depicts a process for short-run MCMC inference, according to embodiments of the present disclosure.

In step 605, an initial distribution $p_0$ is randomly sampled from a Gaussian prior distribution $\mathcal{N}(0, I_d)$. In step 610, a short-rum MCMC inference is implemented, using finite-step Langevin dynamics, to infer a plurality of latent vectors from observed examples generated from a latent variable model $g_\theta$. In each Langevin step, the short-run MCMC may be initialized by random noise or inferred results obtained in a previous step.

FIG. 7 depicts a process for optimal transport correction, according to embodiments of the present disclosure. In step 705, given a plurality of inferred latent vectors and a plurality of samples randomly sampled from a prior (e.g., a Gaussian distribution $N(0, I_d)$), a bijective OT map comprising a plurality of transport paths to map the plurality of inferred latent vectors to the plurality of samples is iteratively optimized using gradient descent optimization. In step 710, when a stop condition is met, the bijective OT map $\hat{T}$ is built to obtain an OT result $\hat{T}(\hat{z}_i)$ comprising a plurality of mapped latent vectors. The stop condition may be an iteration number being met or an optimization gradient becoming less than a predetermined threshold. In step 715, a plurality of OT corrected latent vectors is obtained by a mixture of the plurality of mapped latent vectors and the plurality of inferred latent vectors, with the percentage of the mapped latent vectors controlled by a hyperparameter between 0 and 1. Afterwards, the plurality of OT corrected latent vectors may be used for updating model parameters of the deep latent variable in the learning step.

It shall be noted that although Methodology 2 shows an updating process according to Adam method with $\beta_1$ = 0.9 and $\beta_2$ = 0.5, parameters $\beta_1$, an exponential decay rate for the first moment estimates, and $\beta_2$, an exponential decay rate for the second-moment estimates, may be other values and other methods may be used. Such variations shall be still within the scope of the present patent document.

**2. Optimal transport**

Given the latent codes sampled from $q_\phi(z^K)$, namely $\{\hat{z}_i\}_{i=1}^n$, and the randomly generated samples $\{z_j\}_{j=1}^n$, from the prior $\mathcal{N}(0, I_d)$, the one-to-one map from $\{\hat{z}_i\}$ to $\{z_j\}$ is computed through the optimal transport. Specifically, in one or more embodiments, the cost function is set to be the squared Euclidean distance $c_{ij} = \|\hat{z}_i - z_j\|_2^2$ because it has a beautiful geometric meaning, and the following assignment problem is then solved:

$$\min_{\pi \in \Pi} \sum_{i,j=1}^n \pi_{ij} \, c_{ij} \qquad (11)$$

where $\Pi = \{\pi \,|\, \sum_{j=1}^{n} \pi_{ij} = \frac{1}{n}, \sum_{j=1}^{n} \pi_{ij} = \frac{1}{n}, \pi_{ij} \geq 0\}$ .

According to the linear programming theory, there will be only one nonzero element in each row/column of $\pi$. Actually, all of the nonzero elements should be equal to 1/$n$. Thus, the map from $\{\hat{z}_i\}$ to $\{z_j\}$ may be defined as: $T: \hat{z}_i \to z_j$ if $\pi_{ij} \neq 0$. When $n$ is large, directly solving the above problem with Linear Programming will be problematic, since the computational complexity is prohibitively high $O(n^{2.5})$. Similarly, the classical Hungarian algorithm for the assignment problem cannot be used to solve this problem due to the high computational complexity $O(n^3)$. It is also impossible to solve the above problem with the approximate OT solvers, e.g., the Sinkhorn algorithm, since these solvers tend to give a dense transport plan, from which it is impossible to recover the OT map. Moreover, the approximate algorithms are not suitable for large scale problems with n > 20,000. Thus, the dual problem of Equation (11) is used. In one or more embodiments, the original dual formula for the semi-discrete OT may be extended to the following minimization problem in a discrete setting:

$$\min_{h} E(h) = \frac{1}{n}\sum_{j=1}^{n} \max_{j}\{\langle \hat{z}_i, z_j \rangle + h_j\} - \frac{1}{n}\sum_{j=1}^{n} h_j. \qquad (12)$$

The above problem is convex as it is the maximum of the summation of n hyperplanes. Thus, it may be solved by the gradient descent optimization. The gradient is computed by $\dfrac{\partial E}{\partial h_j} = \dfrac{\#J_j}{n} - \dfrac{1}{n}$ , where $J_j = \{i | \langle \hat{z}_i, z_j \rangle + h_j \geq \langle \hat{z}_i, z_k \rangle + h_k \forall k \in [n]\}$ and $\#J_j$ is the number of elements in $J_j$. Assume $h^*$ is an optimal solution of $E(h)$, then $h = h^* + (c, c,..., c)^T$ is also an optimal solution. To omit the ambulation, $\nabla E(h)$ is defined $\nabla E(h) = \nabla E(h)$ - mean($\nabla E(h)$). With the gradient information, the energy $E(h)$ may be minimized by the Adam gradient descent algorithm.

Since Equation (12) is the dual of the assignment problem, with the optimal solution $h^*$ , it is easy to reconstruct the one-to-one OT map from $\{\hat{z}_i\}$ to $\{z_j\}$ by $T: \hat{z}_i \to z_j, j = \arg\max_{k}\langle \hat{z}_i, z_k \rangle + h_k^* \,\forall k \in [n]$ . During the optimization process, the process stops when the norm of the gradient $\nabla E(h)$ is less than a predetermined threshold $\varepsilon$. Ideally, if $\varepsilon = 0$, the map $T$ becomes injective and surjective, and each $J_j$ only includes one element, namely the corresponding $i$. In that case, the OT map $T$ is well defined. In reality, $\varepsilon$ is usually set $\varepsilon > 0$, therefore $T$ becomes neither injective nor surjective. In such a situation, for some $z_j$s, there may be one or more corresponding $\hat{z}_i$s ; and for some other $z_j$s, the corresponding $\hat{z}_i$s may not exist. To omit the ambiguity and reconstruct the one-to-one map, it is necessary to handle the set $J_j$ that will be empty or include one or more elements. The approximate OT map $\hat{T}$ is thus given by: (1) if there is only one element in $J_j$, namely $i$, then $\hat{T}(\hat{z}_i) = z_j$; (2) when $J_j$ includes more than one element, $i \in J_j$ is randomly selected and the others are abandoned, then define $\hat{T}(\hat{z}_i) = z_j$; (3) the abandoned $\hat{z}_i$s and the $\hat{z}_j$s corresponding to the empty $J_j$s are removed from the domain and range of $\hat{T}$, respectively. In such a way, a new injective and surjective map $\hat{T}$ that approximates the OT map $T$ well may be built.

It shall be noted that in embodiments of the disclosed OT methodology, the prior distribution is not limited to the Gaussian distribution. Any prior distribution may actually be chosen as long as it is easy to sample from. Additionally, the computational complexity to solve the non-smooth dual problem in Equation (12) is $O(n^2/\sqrt{\varepsilon})$ . Under the background of training the complex neural networks with a large number of parameters, the time used to optimize the OT problem is negligible. Finally, the number of the removed samples from $\hat{T}$ should not be larger than $n\varepsilon$. In one or more experiments, $\varepsilon$ usually set as $\varepsilon = 0.05$. With such a small $\varepsilon$, a good approximation of the OT map may be obtained.

## F. Experimental Results

It shall be noted that these experiments and results are provided by way of illustration and were performed under specific conditions using a specific embodiment or embodiments; accordingly, neither these experiments nor their results shall be used to limit the scope of the disclosure of the current patent document.

In the experiments, embodiments of the disclosed model were tested in terms of whether it may (1) successfully correct the marginal distribution $q_\phi(z^K)$ of the latent vectors inferred by the short-run Langevin dynamics, (2) learn an expressive generator that synthesizes visually realistic images from the prior distribution, and (3) successfully perform anomaly detection. To show the performance of the disclosed method, experiments were done on various datasets.

Details about the design of the generator architecture, the choices of the model hyperparameters and the optimization method for each dataset can be found in the supplementary material. Moreover, to investigate the influence of different hyperparameters, Dataset A was mainly used due to its simplicity and representativeness. To quantify the performance of the model, the mean squared error (MSE) and the Frechet Inception Distance (FID) score were adopted to measure the quality of the reconstructed and generated images. FID score is a metric for evaluating the quality of generated images.

**Datasets:** Various datasets were used for training and/or testing in one or more experiments. Some sample data, such as image data, were randomly selected for the purpose of quick convergence. All of the training images were resized and scaled to the range of [-1,1].

**Model architectures:** The architectures of the models are presented in Table 1, where the numbers of latent dimensions are set to be 30, 64, 64 for the Dataset A, Dataset B, and Dataset C, respectively.

Table 1. The architectures of the generators for different datasets

| Models | Layer | Number of outputs | Kernel size | stride | padding | Output padding | BN | activation |
|---|---|---|---|---|---|---|---|---|
| Dataset A | Input z | 30 | - | - | - | - | - | - |
| | Linear | 1024 | - | - | - | - | yes | ReLU |
| | Linear | 7*7*128 | - | - | - | - | yes | ReLU |
| | convT | 14*14*64 | 2*2 | 2 | - | - | yes | ReLU |
| | convT | 28*28*3 | 2*2 | 2 | - | - | - | Tanh |
| Dataset B | Input | z 64 | - | - | - | - | - | - |
| | convT | 2*2*64*8 | - | - | - | - | - | - |
| | convT | 4*4*64*4 | 5*5 | 2 | 2 | 1 | yes | ReLU |
| | convT | 8*8*64*2 | 5*5 | 2 | 2 | 1 | yes | ReLU |
| | convT | 16*16*64 | 5*5 | 2 | 2 | 1 | yes | ReLU |
| | convT | 32*32*3 | 5*5 | 2 | 2 | 1 | - | Tanh |
| Dataset C | Input z | 64 | - | - | - | - | - | - |
| | convT | 4*4*128*8 | - | - | - | - | - | - |
| | convT | 8*8*128*4 | 5*5 | 2 | 2 | 1 | yes | ReLU |
| | convT | 16*16*128*2 | 5*5 | 2 | 2 | 1 | yes | ReLU |
| | convT | 32*32*128 | 5*5 | 2 | 2 | 1 | yes | ReLU |
| | convT | 64*64*3 | 5*5 | 2 | 2 | 1 | - | Tanh |

**Optimization:** The parameters for the generators are initialized with Xavier normal and then optimized with the Adam optimizer with $\beta_1 = 0.5$ and $\beta_2 = 0.99$ . For all of the experiments, the batch size was set to be 2,000. In Methodology 1, both $L$ and $K$ are set to be 50. The hyperparameter $\alpha$ is set to be 0.5 for the Dataset A, and 0.3 for Dataset B and Dataset C. The step sizes s for Datasets A, B, and C are set to be 0.3, 3.0, 3.0, respectively. $\Sigma$ was also set $\sigma = 0.3$ for all of the models.

**Computational cost:** Due to the involvement of the short-run MCMC and the optimal transport, it is necessary to consider the running time of the whole pipeline. Here the Dataset B including multiple images with the size $32 \times 32 \times 3$ was taken as an example. Embodiments of the disclosed model were trained on two NVIDIA TitanX GPUs. For each iteration, the inference step with $K = 30$ takes about 124 minutes, the correction step by optimal transport takes about 10 minutes and the learning step with $L_2 = 2$ takes 5 minutes. Generally, it is necessary to run 10 ~ 15 iterations for the model, which will consume about one day.

## 1. Latent space analysis

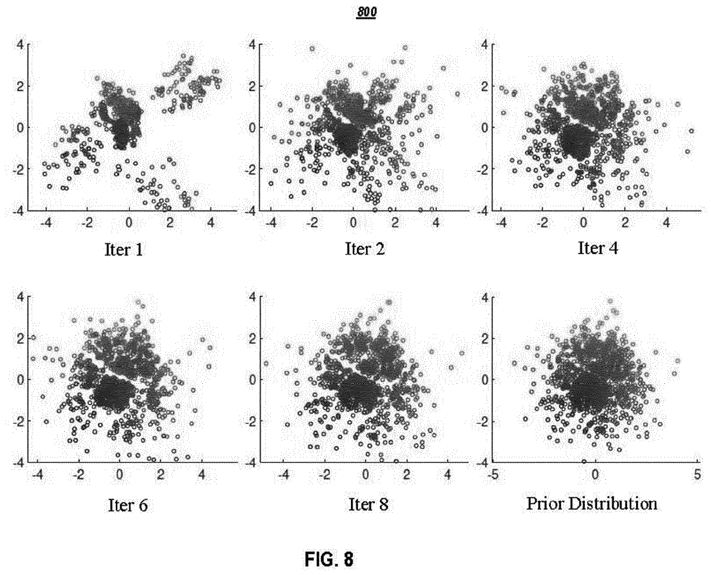

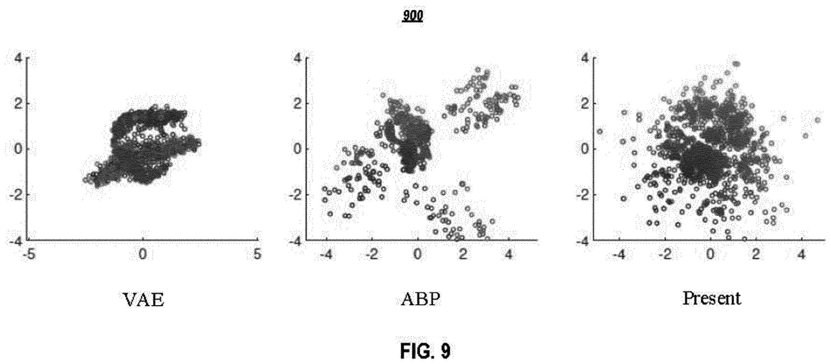

To verify that the proposed method does correct the short-run marginal distribution $q_\theta(z^K)$ of the latent variables, the classes "0" and "1" of the Dataset A were picked up. From the classes, embodiments of the disclosed model were learned with the latent space dimension set to be 2 for better visualization. FIG. 8 shows the evolution of $q_\theta(z^K)$ at different iterations for embodiments of the disclosed model. In the FIG where the iteration indicates the number of OT corrections. It is clearly seen from FIG. 8 that $q_\theta(z^K)$ gradually moves toward the prior distribution due to the OT correction, and finally matches it. FIG. 9 shows a comparison of the latent vectors inferred by the VAE model, the ABP model and embodiments of the disclosed model (shown as "Present"), respectively. The distributions of latent vectors inferred by the VAE and the ABP models are far from the prior (Gaussian) distribution, while the marginal distribution $q_\theta(z^K)$ of the disclosed model looks much closer to a Gaussian distribution.

## 2. Image modeling

In one or more experiments, quality of both the reconstructed and generated images was evaluated. With a well-learned model, the marginal distribution of $q_\phi(z^K)$ should match the prior distribution well. In such a case, the generator will be a probability transformation from the prior Gaussian distribution to the image distribution, and a high quality image may be synthesized by $I = g_\phi(z)$ with a latent vector $z$ sampled from the prior distribution. Additionally, the model may be useful for reconstruction. In the following, embodiments of the disclosed model were compared to the VAE, its variants two-stage VAE (2sVAE) and regularized autoencoder (RAE). Comparisons were also made with the ABP model and its variant short-run inference (SRI), whose generator has multiple layers of latent variables. The last model for comparison is the latent space energy-based model (LEBM) model, which uses an energy-based short-run MCMC to infer the latent variables of each observed image.

Given the reconstructed and the generated images with the latent vectors sampled from the given prior distribution, it is obvious that the generated images are realistic and comparable to the real ones in the training datasets. In Table 2, the MSE was used to test the quality of the reconstructed images and the FID score to quantify the quality the generated images. From the table it was found that embodiments of the disclosed method (shown as "Present" column) outperformed the other methods in the tasks of reconstruction and generation.

Table 2. Comparison results on different datasets. The MSE and FID (smaller is better) are used to test the quality of the reconstructed and generated images, respectively.

| Models | | VAE | 2sVAE | RAE | ABP | SRI | SRI (L=5) | LEBM | Present |
|---|---|---|---|---|---|---|---|---|---|
| Dataset A | MSE | 0.023 | 0.026 | 0.015 | - | 0.019 | 0.015 | - | **0.0008** |
| | FID | 19.21 | 18.81 | 23.92 | - | - | - | - | **14.28** |
| Dataset B | MSE | 0.019 | 0.019 | 0.014 | - | 0.018 | 0.011 | 0.008 | **0.002** |
| | FID | 46.78 | 42.81 | 40.02 | 49.71 | 44.86 | 35.23 | 29.44 | **19.48** |
| Dataset C | MSE | 0.021 | 0.021 | 0.018 | - | 0.020 | 0.015 | 0.013 | **0.010** |
| | FID | 65.75 | 49.70 | 40.95 | 51.50 | 61.03 | 47.95 | 37.87 | **29.75** |

Table 3. AUPRC scores (larger is better) for unsupervised anomaly detection on Dataset A. Results for embodiments of the disclosed model are averaged over 10 experiments for variance.

| Heldout Digit | 1 | 4 | 5 | 7 | 9 |
|---|---|---|---|---|---|
| VAE | 0.063 | 0.337 | 0.325 | 0.148 | 0.104 |
| MEG | 0.281± 0.035 | 0.401± 0.061 | 0.402± 0.062 | 0.290± 0.040 | 0.342± 0.034 |
| Bigan-$\sigma$ | 0.287± 0.023 | 0.443± 0.029 | 0.514± 0.029 | 0.347± 0.017 | 0.307± 0.028 |
| LEBM | 0.336± 0.008 | 0.630± 0.017 | 0.619± 0.013 | 0.463± 0.009 | 0.413± 0.010 |
| ABP | 0.095± 0.028 | 0.138± 0.037 | 0.147± 0.026 | 0.138± 0.021 | 0.102± 0.033 |
| Present | **0.353± 0.021** | **0.770± 0.024** | **0.726± 0.030** | **0.550± 0.013** | **0.555± 0.023** |

## 3. Anomaly detection

Anomaly detection is another task that may help evaluate embodiments of the disclosed model. With a well-learned model from the normal data, the anomalous data may be detected by firstly sampling the latent code $z$ of the given testing image $I$ from the conditional distribution $q_\phi(z^K|I)$ by the short-run Langevin dynamics, and then computing the logarithm of the joint probability $\log p_\theta(I, z)$ in Equation (5). Based on this theory, the joint probability should be high for the normal images and low for the anomalous ones.

In the following experiments, each class in the Dataset A was treated as an anomalous class and the others were left as normal. The model was trained only with the normal data, and then tested with both the normal and anomalous data. To evaluate the performance, $\log p_\theta(I, z)$ was used as a decision function to compute the area under the precision-recall curve (AUPRC). In the test stage, each experiment was run 10 times to get the mean and variance. In Table 3, embodiments of the disclosed method (shown as "Present" column) were compared with the related models in this task, including the VAE, MEG, BiGAN-$\sigma$, LEBM and ABP model, which can be treated as a special case without the OT calibration. From the table, it was found that the tested method embodiment may get much better results than those of other methods.

### 4. Influence of the number of latent dimensions

This subsection shows the influence of the number of dimensions of the latent space under the same architecture. Dataset B was used with different numbers of dimensions of the latent space, e.g., 20, 40 and 64, respectively. As shown in Table 4, with more latent dimensions, much better results may be obtained in terms of both reconstruction and generation.

Table 4. The performances of the proposed method on Dataset B with the same architecture but different numbers of latent dimensions. (Smaller is better for MSE and FID.)

| # Dimension | MSE | FID |
|---|---|---|
| 20 | 0.011 | 36.32 |
| 40 | 0.008 | 24.73 |
| 64 | 0.002 | 19.48 |

### 5. Ablation study

This subsection explores the performances of the proposed model under different values of the parameter $\alpha$ introduced in Equation (10), different step sizes of the Langevin dynamics (the s of Equation (7)), different numbers of Langevin steps (K in Equation (7)) and different numbers of iterations for the learning step that seeks to maximize the joint probability in Equation (5) using the paired data $\{(\hat{z}_i, I_i)\}$.

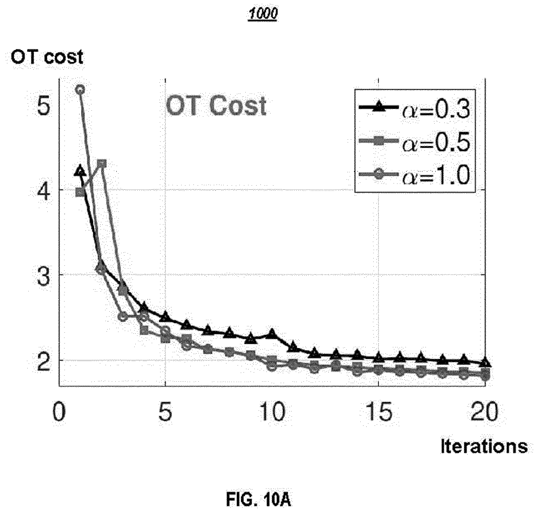

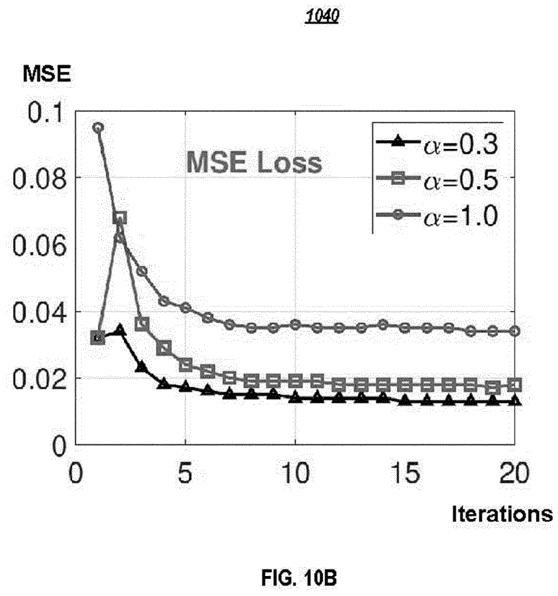

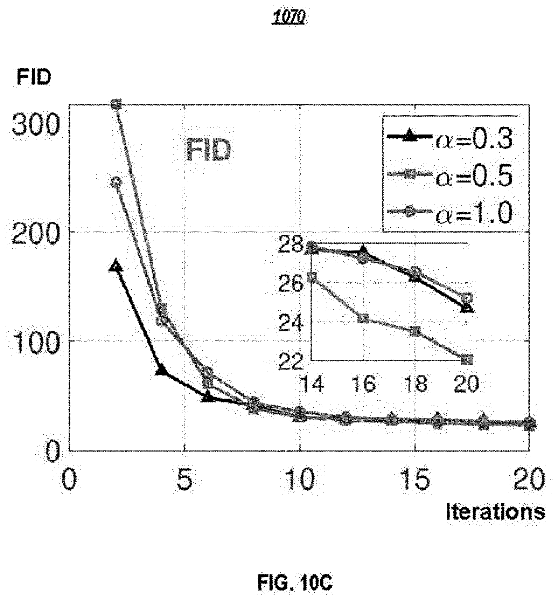

**The influence of** $\alpha$. Firstly, the influence of $\alpha$ in Equation (10) was investigated with results shown in FIGS. 10A, 10B, and 10C. FIG. 10A shows the OT cost from $\{\hat{z}_i\}$ to $\{z_j\}$, which serves as a distance between the $q_\phi(z^K)$ through the short-run Langevin dynamics and the prior distribution $p(z)$. It is obvious that a larger $\alpha$ can pull the marginal distribution $q_\phi(z^K)$ more quickly toward the prior distribution. FIG. 10B suggests that to get a smaller MSE loss, it is better to choose a smaller $\alpha$. As shown in FIG. 10C, the best FID was obtained with a medium $\alpha$, namely $\alpha = 0.5$. Thus, to balance the OT cost, MSE loss and the FID, $\alpha$ is set $\alpha = 0.5$ in the following experiments. From the curves, it was also found that as the algorithm progresses, the marginal distribution $q_\phi(z^K)$ gets increasingly close to the prior distribution $p_0(z)$, and the qualities of both the reconstructed images and the generated images also increase.

**The influence of the Langevin step size.** Table 5 shows the performances of embodiments of the disclosed model with different Langevin step sizes ($s$ in Equation (7)). In the Table, where "Before" means that the model was used before the OT correction, and "After" means the trained model was used after the OT correction. With a small $s$, the MSE loss is indeed very small, but the FID is relatively large, meaning that the quality of the generated images is not very good. When $s$ is large, e.g., $s = 6e^{-2}$ in the last column, both the MSE loss and the FID are large, which means that high quality reconstructed images cannot even be obtained. In this situation, the model actually doesn't converge very well. Only with the appropriate Langevin step size (in this experiment, $s = 3e^{-2}$), a good balance between the MSE and the FID may be obtained for satisfying reconstruction and generation results.

Table 5. The influence of the step size of the Langevin dynamics.

| | | $s = 3e^{-3}$ | $s = 1.5e^{-2}$ | $s = 3e^{-2}$ | $s = 6e^{-2}$ |
|---|---|---|---|---|---|
| MSE | Before | 0.007 | 0.008 | 0.011 | 0.027 |
| | After | 0.018 | 0.013 | 0.013 | 0.027 |
| FID | Before | 44.51 | 28.10 | 22.70 | 109.97 |
| | After | 40.61 | 26.86 | 21.89 | 87.77 |

**The influence of the number of Langevin steps.** The number of Langevin steps $K$ in Equation (7) is another key factor that influences the performance of the proposed method. Theoretically, larger $K$ will cause a more convergent MCMC inference, so as to help getting more accurate latent variables. To prove this point, $K$ was set as $K = 30, 50, 100$ respectively, and the other parameters were kept fixed. The results are shown in Table 6. Indeed, a larger $K$ leads to a better result. However, a large $K$ will also increase the running time for the whole pipeline linearly. Thus, to get a good balance between the running time and the performance, it is needed to choose the suitable $K$ for different datasets.

Table 6. The influence of the number of Langevin steps $K$.

|  | $K$ = 30 | $K$ = 50 | $K$ = 100 |
|---|---|---|---|
| MSE | 0.014 | 0.011 | 0.007 |
| FID | 22.32 | 18.57 | 15.43 |

**The influence of the number of iterations inside the learning step.** In Methodology 1, several iterations, denoted by $L_2$, of gradient ascent were actually run inside the learning step to maximize the joint probability in Equation (5) by the paired data $\{(\hat{z}_i, I_i)\}$. The results are shown in Table 7. From the table, it was found that by increasing $L_2$, much better performances may be obtained for image reconstruction and generation.

Table 7. The influence of the number of learning iterations.

|  | $L_2$ = 1 | $L_2$ = 2 | $L_2$ = 3 |
|---|---|---|---|
| MSE | 0.013 | 0.010 | 0.008 |
| FID | 21.89 | 17.32 | 14.28 |

## G. Some Conclusions

The present document discloses embodiments of using the OT to correct the bias of the short-run MCMC-based inference in training the deep latent variable models. Specifically, in one or more embodiments, the marginal distribution of the latent variables of the short-run Langevin dynamics is corrected through the OT map between this distribution and the prior distribution step by step. In such a way, the distribution of the inferred latent vectors may finally converge to the prior distribution, thus improving the accuracy of the subsequent parameter learning. Experimental results show that the disclosed training method embodiments performed better than the ABP and VAE models on the tasks like image reconstruction, image generation and anomaly detection.

## A. Computing System Embodiments

In one or more embodiments, aspects of the present patent document may be directed to, may include, or may be implemented on one or more information handling systems (or computing systems). An information handling system/computing system may include any instrumentality or aggregate of instrumentalities operable to compute, calculate, determine, classify, process, transmit, receive, retrieve, originate, route, switch, store, display, communicate, manifest, detect, record, reproduce, handle, or utilize any form of information, intelligence, or data. For example, a computing system may be or may include a personal computer (e.g., laptop), tablet computer, mobile device (e.g., personal digital assistant (PDA), smart phone, phablet, tablet, etc.), smart watch, server (e.g., blade server or rack server), a network storage device, camera, or any other suitable device and may vary in size, shape, performance, functionality, and price. The computing system may include random access memory (RAM), one or more processing resources such as a central processing unit (CPU) or hardware or software control logic, read only memory (ROM), and/or other types of memory. Additional components of the computing system may include one or more drives (e.g., hard disk drive, solid state drive, or both), one or more network ports for communicating with external devices as well as various input and output (I/O) devices, such as a keyboard, mouse, touchscreen, stylus, microphone, camera, trackpad, display, etc. The computing system may also include one or more buses operable to transmit communications between the various hardware components.

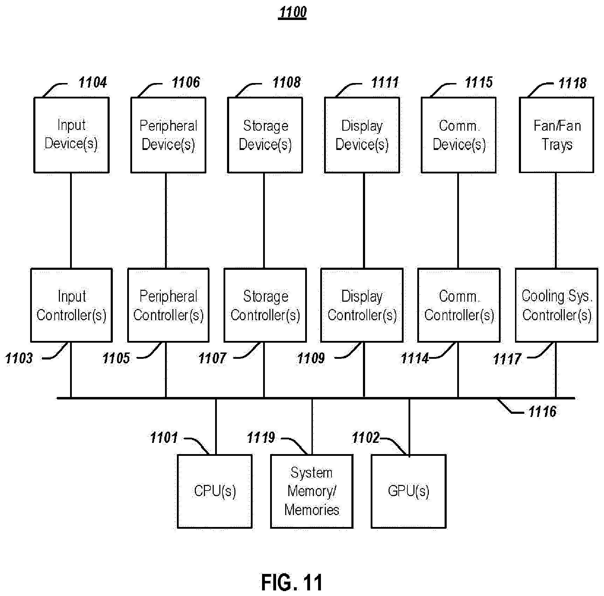

FIG. 11 depicts a simplified block diagram of an information handling system (or computing system), according to embodiments of the present disclosure. It will be understood that the functionalities shown for system 1100 may operate to support various embodiments of a computing system-although it shall be understood that a computing system may be differently configured and include different components, including having fewer or more components as depicted in FIG. 11.

As illustrated in FIG. 11, the computing system 1100 includes one or more CPUs 1101 that provides computing resources and controls the computer. CPU 1101 may be implemented with a microprocessor or the like, and may also include one or more graphics processing units (GPU) 1102 and/or a floating-point coprocessor for mathematical computations. In one or more embodiments, one or more GPUs 1102 may be incorporated within the display controller 1109, such as part of a graphics card or cards. Thy system 1100 may also include a system memory 1119, which may comprise RAM, ROM, or both.

A number of controllers and peripheral devices may also be provided, as shown in FIG. 11. An input controller 1103 represents an interface to various input device(s) 1104. The computing system 1100 may also include a storage controller 1107 for interfacing with one or more storage devices 1108 each of which includes a storage medium such as magnetic tape or disk, or an optical medium that might be used to record programs of instructions for operating systems, utilities, and applications, which may include embodiments of programs that implement various aspects of the present disclosure. Storage device(s) 1108 may also be used to store processed data or data to be processed in accordance with the disclosure. The system 1100 may also include a display controller 1109 for providing an interface to a display device 1111, which may be a cathode ray tube (CRT) display, a thin film transistor (TFT) display, organic light-emitting diode, electroluminescent panel, plasma panel, or any other type of display. The computing system 1100 may also include one or more peripheral controllers or interfaces 1105 for one or more peripherals 1106. Examples of peripherals may include one or more printers, scanners, input devices, output devices, sensors, and the like. A communications controller 1114 may interface with one or more communication devices 1115, which enables the system 1100 to connect to remote devices through any of a variety of networks including the Internet, a cloud resource (e.g., an Ethernet cloud, a Fiber Channel over Ethernet (FCoE)/Data Center Bridging (DCB) cloud, etc.), a local area network (LAN), a wide area network (WAN), a storage area network (SAN) or through any suitable electromagnetic carrier signals including infrared signals. As shown in the depicted embodiment, the computing system 1100 comprises one or more fans or fan trays 1118 and a cooling subsystem controller or controllers 1117 that monitors thermal temperature(s) of the system 1100 (or components thereof) and operates the fans/fan trays 1118 to help regulate the temperature.

In the illustrated system, all major system components may connect to a bus 1116, which may represent more than one physical bus. However, various system components may or may not be in physical proximity to one another. For example, input data and/or output data may be remotely transmitted from one physical location to another. In addition, programs that implement various aspects of the disclosure may be accessed from a remote location (e.g., a server) over a network. Such data and/or programs may be conveyed through any of a variety of machine-readable medium including, for example: magnetic media such as hard disks, floppy disks, and magnetic tape; optical media such as compact discs (CDs) and holographic devices; magneto-optical media; and hardware devices that are specially configured to store or to store and execute program code, such as application specific integrated circuits (ASICs), programmable logic devices (PLDs), flash memory devices, other non-volatile memory (NVM) devices (such as 3D XPoint-based devices), and ROM and RAM devices.

Aspects of the present disclosure may be encoded upon one or more non-transitory computer-readable media with instructions for one or more processors or processing units to cause steps to be performed. It shall be noted that the one or more non-transitory computer-readable media shall include volatile and/or non-volatile memory. It shall be noted that alternative implementations are possible, including a hardware implementation or a software/hardware implementation. Hardware-implemented functions may be realized using ASIC(s), programmable arrays, digital signal processing circuitry, or the like. Accordingly, the "means" terms in any claims are intended to cover both software and hardware implementations. Similarly, the term "computer-readable medium or media" as used herein includes software and/or hardware having a program of instructions embodied thereon, or a combination thereof. With these implementation alternatives in mind, it is to be understood that the figures and accompanying description provide the functional information one skilled in the art would require to write program code (i.e., software) and/or to fabricate circuits (i.e., hardware) to perform the processing required.

It shall be noted that embodiments of the present disclosure may further relate to computer products with a non-transitory, tangible computer-readable medium that have computer code thereon for performing various computer-implemented operations. The media and computer code may be those specially designed and constructed for the purposes of the present disclosure, or they may be of the kind known or available to those having skill in the relevant arts. Examples of tangible computer-readable media include, for example: magnetic media such as hard disks, floppy disks, and magnetic tape; optical media such as CDs and holographic devices; magneto-optical media; and hardware devices that are specially configured to store or to store and execute program code, such as ASICs, PLDs, flash memory devices, other non-volatile memory devices (such as 3D XPoint-based devices), and ROM and RAM devices. Examples of computer code include machine code, such as produced by a compiler, and files containing higher level code that are executed by a computer using an interpreter. Embodiments of the present disclosure may be implemented in whole or in part as machine-executable instructions that may be in program modules that are executed by a processing device. Examples of program modules include libraries, programs, routines, objects, components, and data structures. In distributed computing environments, program modules may be physically located in settings that are local, remote, or both.

One skilled in the art will recognize no computing system or programming language is critical to the practice of the present disclosure. One skilled in the art will also recognize that a number of the elements described above may be physically and/or functionally separated into modules and/or sub-modules or combined together.

It will be appreciated to those skilled in the art that the preceding examples and embodiments are exemplary and not limiting to the scope of the present disclosure. It is intended that all permutations, enhancements, equivalents, combinations, and improvements thereto that are apparent to those skilled in the art upon a reading of the specification and a study of the drawings are included within the true spirit and scope of the present disclosure. It shall also be noted that elements of any claims may be arranged differently including having multiple dependencies, configurations, and combinations.

**Claims**

1. A computer-implemented method (400) for training a latent variable model comprising:

   inferring, by a short-run Markov chain Monte Carlo (MCMC), a latent vector for each of a plurality of observed examples that are generated from the latent variable model to obtain a population of inferred latent vectors (405); moving, through optimal transport (OT) correction, the population of inferred latent vectors to a prior distribution (410); and
   updating model parameters of the latent variable model by gradient descent based on the corrected latent vectors and corresponding observed examples (415).

2. The computer-implemented method (400) of claim 1 wherein the short-run MCMC is an iterative process with a finite number of Langevin dynamics steps running for inference within each iteration.

3. The computer-implemented method (400) of claim 2 wherein for each iteration, the short-run MCMC starts from a noise distribution randomly sampled from a Gaussian distribution, or from an inference result obtained in a previous iteration.

4. The computer-implemented method (400) of claim 2 the OT correction is performed after a predetermined number of iterations for the short-run MCMC.

5. The computer-implemented method (400) of any of claims 1-4, wherein the OT correction comprising steps of:

   given the population of inferred latent vectors and a plurality of samples randomly sampled from a prior, iteratively optimizing, using gradient descent optimization, a bijective OT map comprising a plurality of transport paths to map the plurality of inferred latent vectors to the plurality of samples (705);
   building the bijective OT map to obtain an OT result comprising a plurality of mapped latent vectors when a stop condition is met (710); and
   obtaining a plurality of corrected latent vectors is obtained by a mixture of the plurality of mapped latent vectors and the plurality of inferred latent vectors (715).

6. The computer-implemented method (400) of claim 5 wherein the stop condition is an iteration number being met or an optimization gradient becoming less than a predetermined threshold.

7. The computer-implemented method (400) of claim 5 wherein the percentage of the mapped latent vectors in the mixture is controlled by a hyperparameter valued between 0 and 1.

8. The computer-implemented method (400) of claim 5 wherein the OT correction has a cost function set as the squared Euclidean distance.

9. A system for training a latent variable model comprising:

   one or more processors; and
   a non-transitory computer-readable medium or media comprising one or more sets of instructions which, when executed by at least one of the one or more processors, causes steps of the method according to any of claims 1-8 to be performed.

10. A non-transitory computer-readable medium or media comprising one or more sequences of instructions which, when executed by at least one processor, causes steps of the method for training a latent variable model according to any of claims 1-8.

**FIG. 1**

EP 4 095 757 A1

200

MCMC sampling

$\mathbf{Z}$ 210

Generator

$\mathbf{I}$

MCMC-based MLE

$\mathbf{Z}'$ 220

Inference

$\mathbf{I}$

$\mathbf{Z}$

Generator

$\mathbf{I}$

Variational auto-encoder (VAE)

Generator

$\mathbf{I}'$

$\mathbf{I}$

Discriminator

230

$c$

Generative Adversarial network (GAN)

FIG. 2

*300*

FIG. 3

_400_

| |
|---|
| Inferring, by a short-run MCMC, a latent vector for each of a plurality of observed examples generated by a deep latent variable model to obtain to obtain a population of inferred latent vectors |

405

↓

| |
|---|
| Moving the population of all the inferred latent vectors to a prior distribution through optimal transport |

410

↓

| |
|---|
| Updating model parameters by gradient descent based on the corrected latent vectors and corresponding observed examples |

415

# FIG. 4

_500_

$\hat{T}$

510

Output Population by short-run MCMC $\{\hat{z}_i\}$

520

$\{z_j\} \sim N(0,1)$

# FIG. 5

**600**

Randomly sample from a Gaussian prior distribution to get an initial distribution ⟋ 605

Implement a short-rum MCMC inference, using finite-step Langevin dynamics, to infer a plurality of latent vectors from observed examples generated from a latent variable model ⟋ 610

## FIG. 6

**700**

Given a plurality of inferred latent vectors and a plurality of samples randomly sampled from a prior, iteratively optimizing, using gradient descent optimization, a bijective OT map comprising a plurality of transport paths to map the plurality of inferred latent vectors to the plurality of samples ⟋ 705

Building the bijective OT map to obtain an OT result comprising a plurality of mapped latent vectors when a stop condition is met ⟋ 710

Obtaining a plurality of OT corrected latent vectors is obtained by a mixture of the plurality of mapped latent vectors and the plurality of inferred latent vectors ⟋ 715

## FIG. 7

800

Iter 1

Iter 2

Iter 4

Iter 6

Iter 8

Prior Distribution

FIG. 8

VAE        ABP        Present

**FIG. 9**

FIG. 10A

_1040_

FIG. 10B

<u>1070</u>

FIG. 10C

*1100*

FIG. 11

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | An Dongsheng ET AL: "Learning Deep Latent Variable Models by Short-Run MCMC Inference with Optimal Transport Correction", , 8 April 2021 (2021-04-08), XP055966366, Retrieved from the Internet: URL:http://www.stat.ucla.edu/~jxie/persona lpage_file/publications/MCMC_OT.pdf [retrieved on 2022-09-29] * the whole document * | 1-10 | INV. G06N3/04 G06N7/00 G06N3/08 |
| X | NIJKAMP ERIK ET AL: "Learning Multi-layer Latent Variable Model via Variational Optimization of Short Run MCMC for Approximate Inference", 2020, ARXIV.ORG, PAGE(S) 361 – 378, XP047590901, * abstract * * Section 2 * | 1-10 | |
| A | MATTHEW PARNO ET AL: "Transport map accelerated Markov chain Monte Carlo", ARXIV.ORG, CORNELL UNIVERSITY LIBRARY, 201 OLIN LIBRARY CORNELL UNIVERSITY ITHACA, NY 14853, 17 December 2014 (2014-12-17), XP081363895, DOI: 10.1137/17M1134640 * Section 1 * | 1-10 | TECHNICAL FIELDS SEARCHED (IPC) G06N |

The present search report has been drawn up for all claims

| Place of search | Date of completion of the search | Examiner |
|---|---|---|
| The Hague | 20 October 2022 | Bohn, Patrice |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)